Europäisches Patentamt

European Patent Office

Office européen des brevets

(11) Publication number: **0 161 685**
**B1**

(12) **EUROPEAN PATENT SPECIFICATION**

(45) Date of publication of patent specification: **09.01.91**

(21) Application number: **85106022.8**

(22) Date of filing: **15.05.85**

(51) Int. Cl.⁵: **B 60 J 5/04,** B 60 R 13/06

(54) Construction of door frame in motor vehicle.

(30) Priority: **18.05.84 JP 72944/84 u**

(43) Date of publication of application:
**21.11.85 Bulletin 85/47**

(45) Publication of the grant of the patent:
**09.01.91 Bulletin 91/02**

(84) Designated Contracting States:
**DE FR GB**

(56) References cited:
**EP-A-0 040 587**
**EP-A-0 040 588**
**EP-A-0 163 208**
**EP-A-0 164 601**
**DE-A-3 140 140**
**GB-A-2 140 065**

(73) Proprietor: **TOYOTA JIDOSHA KABUSHIKI KAISHA**
**1, Toyota-cho Toyota-shi**
**Aichi-ken 471 (JP)**

(72) Inventor: **Hiramatsu, Eiji**
**c/o TOYOTA JIDOSHA K.K. 1, Toyota-cho**
**Toyota-shi Aichi-ken (JP)**
Inventor: **Shiraishi, Daiichi**
**c/o TOYOTA JIDOSHA K.K. 1, Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

Description

This invention relates to a construction of a door frame according to the preamble of the patent claim 1.

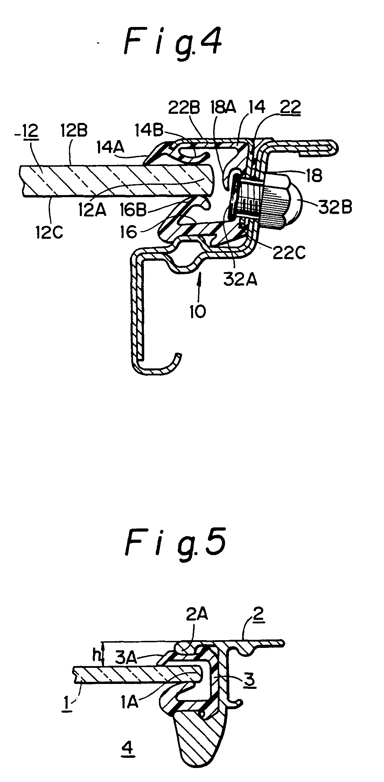

Such a conventional construction of a door frame is shown in Fig. 5. This known door frame has a glass run 3 being of a U-shape in cross section, being in relatively sliding contact with the inner and outer surfaces of a forward or rear end edge 1A of the door glass 1, thereby, guiding the door glass 1 in the opening or closing direction thereof and sealing a space formed between the door glass 1 and the door frame 2.

The above-described construction of the door frame can guide the door glass 1 in the sealed condition and reliably prevent the door glass 1 from being pushed outwardly due to a difference in pressure between the interior and the exterior of the compartment during running of the motor vehicle at high speed.

However, the above-described construction of the door frame presents such a disadvantage that a leg 2A of the door frame 2 is extended further outwardly of an outer side portion 3A of the glass run 3, which portion 3A is in contact with the outer surface of the door glass 1, whereby the glass run 3 should be pushed in from outside, and, because of this, a difference h in stage between the outer surface of the door glass 1 and the door frame 2 becomes large.

To obviate the above-described disadvantage, as described in the DE-PS 2 809 721 and in the EP-A-0 040 588 for example, there is proposed a construction of a door frame in a motor vehicle, wherein a slider and a support member, respectively, is mounted to the forward or rear end edge of the door glass in a manner to be shifted toward the interior of the compartment. The slider and the support member, respectively, is guided by the door frame in the direction of opening or closing of the door glass.

Either one of these constructions presents the disadvantage that a slider or a guide is needed, thus raising the manufacturing cost or narrowing the opening area of the door glass by the presence of the slider.

The Japanese Utility Model Laid-Open (Kokai) JP-U-65117/1983 (Refer to Fig. 6), describes a construction wherein an outer side portion 3A of a glass run 3 is covered by core plate member 7 for reinforcing this glass run 3 and an outer surface of the core plate member 7 is directly exposed to the outside of the vehicle body without a door frame 2 being extended outwardly of the core plate member 7.

An essentially similar construction is known from the DE-A-31 40 140 whereby the core plate is surrounded by the outer side portion of the glass run.

DE-A-31 30 140 describes a construction of a door frame with a glass run being reinforced by a core plate member and having an inner side portion, an outer side portion and a bottom portion connecting said outer and inner side portions, said door glass being guided slidably in said portions. A shifting of the door glass outwards seen — in cross direction of the vehicle — is prevented by the outer side portion, which overlaps the corresponding outer edge of the door glass.

In the above described constructions the core plate and the outer side portion of the glass run, respectively, is flush with the outer surface of the door frame. A gradation between the outer surface of the door glass and the outer surface of the door frame results therefrom necessarily. This gradation results in a considerable increase of the noise level in the vehicle interior due to the turbulences occurring there especially at high speed.

The problem underlies the subject-matter of the invention to develop the generic construction of a door frame in a motor vehicle such that the development of the driving noise is retained at a low noise level even at high speed.

This problem is solved according to the invention by the features in the characterizing portion of claim 1.

According to the present invention, the outer surface of the outer side portion of the glass run is not covered by the door frame, the guide of the outer surface of the door glass is provided only by the outer side portion, and the door glass is displaced toward the outer side portion within the glass run and is substantially flush with the outer surface of the door frame, so that the door glass and the door frame can be substantially flush with each other.

Advantageous developments of the invention are subject matter of the subclaims.

Preferred embodiments of the invention are described below with reference to the drawings, in which:

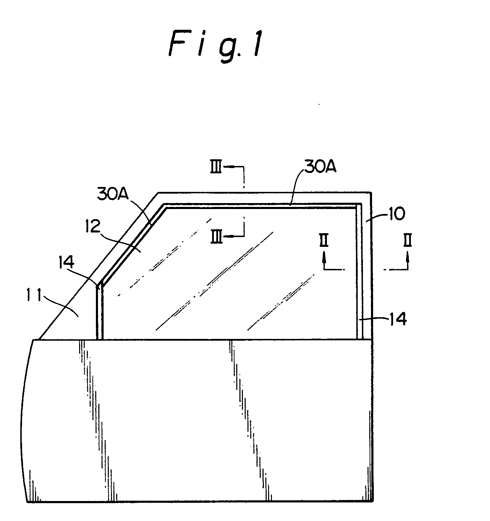

Fig. 1 is a front view showing one embodiment of the construction of the door frame in a motor vehicle;

Figs. 1 and 3 are enlarged sectional views taken along the lines II-II and III-III in Fig. 1, respectively;

Fig. 4 is enlarged sectional view showing a second embodiment of the present invention, of a portion corresponding to the line II-II in Fig. 1;

Fig. 5 is a sectional view showing a conventional door frame construction; and

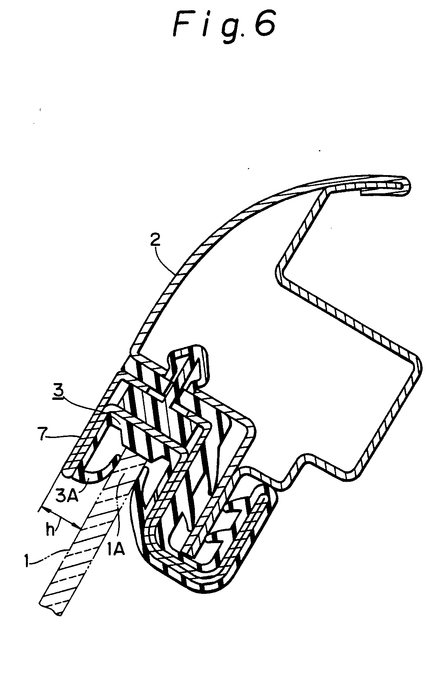

Fig. 6 is a sectional view showing another conventional door frame construction in a motor vehicle.

As shown in Figs. 1 to 3, a construction of a door frame in a motor vehicle according to the present invention, comprises a door frame 10, a glass run 20 having an outer side portion 14 and an inner side portion 16 being in sliding contact with an outer surface 12B and an inner surface 12C of a side end edge 12A of a door glass 12, respectively, and a bottom portion 18 connecting the outer and inner side portions 14 and 16 to each other. Said outer side portion 14, inner side portion 16 and bottom portion being provided for vertically slidably guiding the door glass 12 and sealing a space formed between the door glass 12

and the door frame 10. The glass run further having a core plate member 22 for reinforcing the glass run 20, wherein the outer side portion 14 is disposed such that the outer side portion 14 is exposed to the outside of the vehicle, with respect to the door glass 12. The door glass 12 is shifted toward the outer side portion 14, so that the outer surface 12B of the door glass 12 is substantially flush with the outer surface 10A of the door frame 10.

The inner side portion 16 of the glass run 20, the core plate member 22 and the door frame 10, at the portions which are opposed to the inner surface of a forward or rear side end edge 12A of the door glass 12 are inclined in a manner to be gradually separated from the inner surface of the side end edge 12A toward the interior of a compartment 24 and the center of the door glass 12. The inclined portions 16A and 22A of the inner side portion 16 and of the core plate member 22 are fixed through a tapping screw 26 to an inclined portion 10B of the door frame 10 at a position on the side of the compartment 24 of the side end edge 12A. An inner fin portion 16B is formed which comes into sealingly sliding contact with the inner surface 12C of the forward or rear end edge 12A from the inner side portion 16 and covering a head of the tapping screw 26 from outside.

Designated by 14A is an outer fin portion formed on the forward end of the outer side portion 14 and being in sealingly sliding contact with the outer surface 12B of the side end edge 12A of the door glass 12.

The glass run 20 including the outer fin portion 14A and the inner fin portion 16B is formed of a relatively soft resin including rubber and synthetic resin and manufactured integrally with the metallic core plate member 22 by extrusion, rolling or injection molding.

A projection 28 smoothly continuing the outer surface 10A of the door frame 10 is integrally formed with the glass run 20 in a manner to seal a space formed between the glass run 20 and the door frame 10.

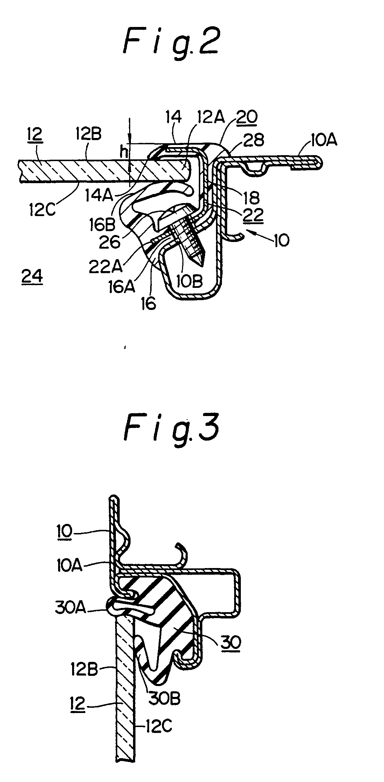

Fig. 3 shows sections of a transverse member and an oblique member, both of which are disposed at the upper side portion of the door frame 10. Mounted to the door frame 10 is a door glass weather strip 30 having a top end sealing projection 30A adapted to be clamped between the top end of the door glass 12 and the door frame to seal a space formed therebetween when the door glass 12 is fully closed and an inner side sealing projection 30B being in contact with the inner surface of the door glass. Even in the upper side portion of the door frame 10, the outer surface portion 10A of the door frame 10 is substantially flush with the outer surface 12B of the door glass 12.

In this embodiment, the door glass 12 is substantially flush with the outer surface 10A of the door frame 10. The outer side portion 14 of the glass run 20 is shifted closer to the outer surface 12B of the door glass 12, and is in sealingly sliding contact with the outer surface 12B of the door glass 12, so that the door glass 12 can be reliably held and guided without permitting the glass run 20 and the core plate member 22 reinforcing the glass run 20 to project substantially to the outside of the vehicle.

Particularly, in this embodiment, as compared with the aforesaid Japanese Utility Model Laid-Open (Kokai) JP-U-65117/1983, the core plate member 22 is previously assembled in the glass run, so that improvements can be effected in reduction of the number of assembling man-hour, the dimensional accuracy in the direction of door glass thickness and the accuracy of assembling with the door glass 12.

Furthermore, in the above embodiment, the inclined portions 16A, 22A and 10B are formed on the inner side portion 16, core plate member 22 and door frame 10, respectively, these inclined portions are fixed and integrally connected to one another by the tapping screw 26. The outer surface of the tapping screw 26 is covered by the inner fin portion 16B integrally extended from the inner side portion 16, so that the operation of assembling the glass run 20 to the door frame 10 can be facilitated and the aesthetic appearance thereof can be improved.

In the second embodiment shown in Fig. 4, the core plate member 22 extends along the outer surface 12B of the door glass 12 on the outboard side of the outer side portion 14 of the glass run 20 and is exposed to the outside.

In this case, the core plate member 22 is formed of a bright material such as stainless steel or aluminum so as to additionally function as a decoration.

Furthermore in this second embodiment, the door frame 10 is curved along the forward or rear end edge 12A of the door glass 12 into a generally crank-shape, while the glass run 20 is formed into a U-shape in cross-section and tightenedly fixed at the bottom portion 18 thereof to the door frame 10 through a bolt 32A and a put 32B.

In the core plate member 22 according to Fig. 4, the inclined portion 22A of the first embodiment is dispensed with, so that the core plate member 22 is constituted only by the outer side portion 22B and the bottom portion 22C.

In Fig. 4, designated by 18A is a projection projecting from the bottom portion 18 of the glass run 20 to thereby prevent the side end edge 12A of the door glass 20 from directly contacting the bolt 32A.

Furthermore, in this embodiment, a second outer fin portion 14B contacting the outer surface 12B of the forward or rear end edge 12A of the door glass 12 is formed at a position opposite to the outer fin portion 14A provided on the forward end of the outer side portion 14 of the glass run 20.

Since the arrangement to the second embodiment in other respects is identical with the first embodiment, and consequently, same reference numerals are used to designate same or similar parts, so that the detailed description thereof need not to be repeated.

As compared with the first embodiment, this second embodiment is applied to the case where measurements of the door frame 10 are essentially limited in the direction of the door thickness. Additionally, the second embodiment is applicable to the case where it is desired to give luster to the frame for the design effect.

In the above embodiments, the outer and inner side portions 14 and 16 of the glass run 20 come into sliding contact with the outer and inner surfaces 12B and 12C of the forward or rear end edge 12a of the door glass 12 through the fin portions 14A, 16B continuously and integrally formed on the forward ends of the outer and inner side portions 14, 16, respectively. However, the present invention need not necessarily be limited to this, and the outer and inner side portions 14 and 16 may directly contact the door glass 12 without providing these fin portions.

Furthermore, in the above embodiments, there is described the door frame for guiding the end side edge 12A of the door glass 12. However, the description may be made on any one if it can guide the side end edge. For example, when a door mirror is mounted to a triangular patch 11 portion in Fig. 1 and so on, the invention is applied only to the rear end edge, while, the forward end edge may have the conventional construction as shown in Fig. 5.

## Claims

1. A construction of a door frame in a motor vehicle, comprising a door frame (10) having an outer surface (10A), a glass run (20) having an outer side portion (14) and an inner side portion (16) in sliding contact with an outer surface (12B) and an inner surface (12C) of a side end edge (12A) of a door glass (12), respectively, and a bottom portion (18) connecting said outer and inner side portions (14, 16) to each other, said outer side portion (14), said inner side portion (16) and said bottom portion (18) being provided for vertically slidably guiding said door glass (12) and sealing a space formed between said door glass (12) and said door frame (10), said glass run (20) further having a core plate member (22) for reinforcing said glass run (20), wherein said outer side portion (14) is located at a position where said door glass (12) is shifted toward said outer side portion (14) between said outer side portion (14) and said inner side portion (16), characterized in that said outer side portion (14) of said glass run (20) is disposed outwardly of said outer surface (10A) of said door frame (10) in the widthwise direction of said vehicle, and that said outer surface (12B) of said door glass (12) is flush with said outer surface (10A) of said door frame (10).

2. A construction of a door frame according to claim 1, characterized in that said core plate member (22) extends along the outer surface (12B) of said door glass (12) on the outboard side of the outer side portion (14) of said glass run (20) and is exposed to the outside.

3. A construction of a door frame according to claim 1 or 2, characterized in that the inner side portion (16) of said glass run (20), said core plate member (22) and said door frame (10), at the portions which are opposed to the inner surface of the side end edge (12A) of said door glass (12), are inclined in a manner to be gradually separated from the inner surface of said side end edge (12A) toward the interior of a compartment (24) and the center of said door glass (12), the inclined portions (16A, 22A) of said inner side portion (16) and of said core plate member (22) are fixed to an inclined portion (10B) of said door frame (10) at a position on the side of the compartment (24) of said side end edge (12A), and an inner fin portion (16B) extending from said inner side portion (16) is formed which comes into sealingly sliding contact with the inner surface (12C) of said side end edge (12A) and which covers the fixed portion from outside.

4. A construction of a door frame according to any one of claims 1, 2 or 3, characterized in that the door frame (10) is curved along the side end edge (12A) of the door glass (12) into a generally crank-shape, the glass run (20) is formed into a U-shape in cross-section and is fixed at the bottom portion (18) thereof to the door frame (10) through a bolt-nut means (32A, 32B), and a projection (18A) is projecting from the bottom portion (18) of the glass run (20) preventing the forward or rear end edge (12A) of the door glass (12) from directly contacting the bolt-nut means (32A, 32B).

5. A construction of a door frame according to any one of claims 1, 2, 3 or 4, characterized in that a door glass weather strip (30) is mounted to a transverse member and an oblique member both of which are disposed at the upper side portion of the door frame (10) and having a top end sealing projection (30A) adapted to be clamped between the top end of the door glass (12) and the door frame (10) to seal a space formed therebetween when the door glass (12) is fully closed and an inner side sealing projection (30B) being in contact with the inner surface (12B) of the door glass (12).

6. A construction of a door frame according to any one of claims 1, 2, 3, 4 or 5, characterized in that the glass run (20) is formed of a relatively soft resin including rubber and synthetic resin and is manufactured integrally with the metallic core plate member (22).

## Patentansprüche

1. Konstruktion eines Türrahmens bei einem Kraftfahrzeug mit einem eine äußere Fläche (10A) aufweisenden Türrahmen (10), mit einer Scheibenführung (20), die ein äußeres Seitenteil (14) sowie ein inneres Seitenteil (16), welche jeweils in Gleitanlage mit einer Außenfläche (12B) sowie einer Innenfläche (12C) einer seitwärtigen Endkante (12A) einer Türscheibe (12) sind, und ein Bodenstück (18), das das erwähnte äußere sowie innere Seitenteil (14, 16) miteinander verbindet, umfaßt, wobei das erwähnte äußere Seitenteil (14), das erwähnte innere Seitenteil (16) und das erwähnte Bodenstück (18) für ein vertikales, gleitendes Führen der besagten Türscheibe (12) und ein Abdichten eines zwischen der besagten Türscheibe (12) sowie dem genannten Türrahmen (10) gebildeten Raumes vorgesehen sind, die besagte Scheibenführung (20) ferner ein diese Scheibenführung (20) verstärkendes Kernplattenteil (22) hat und das erwähnte äußere Seitenteil (14) an einer Stelle angeordnet ist, an welcher die besagte Türscheibe (12) zu dem erwähnten äußeren Seitenteil (14) zwischen dem erwähnten äußeren Seitenteil (14) und dem erwähnten inneren Seitenteil (16) hin verschoben ist, dadurch gekennzeichnet, daß das erwähnte äußere Seitenteil (14) der besagten Scheibenführung (20) auswärts der genannten äußeren Fläche (10A) des besagten Türrahmens (10) in der Breitenrichtung des genannten Fahrzeugs angeordnet ist und daß die erwähnte Außenfläche (12B) der genannten Türscheibe (12) mit der genannten äußeren Fläche (10A) des besagten Türrahmens (10) in Flucht ist.

2. Konstruktion eines Türrahmens nach Anspruch 1, dadurch gekennzeichnet, daß das besagte Kernplattenteil (22) längs der Außenfläche (12B) der genannten Türscheibe (12) an der Außenbordseite des äußeren Seitenteils (14) der erwähnten Scheibenführung (20) verläuft und zur Außenseite hin freiliegt.

3. Konstruktion eines Türrahmens nach Anspruch 1 oder 2, dadurch gekennzeichnet, daß das innere Seitenteil (16) der erwähnten Scheibenführung (20), das besagte Kernplattenteil (22) und der genannte Türrahmen (10) an den Teilen, die der inneren Fläche der seitwärtigen Endkante (12A) der genannten Türscheibe (12) gegenüberliegen, in einer Weise schräg verlaufen, daß sie sich allmählich von der inneren Fläche der genannten seitwärtigen Endkante (12A) zum Inneren eines Insassenraumes (24) hin entfernen, daß das Zentrum der besagten Türscheibe (12), die schrägen Teile (16A, 22A) des besagten inneren Seitenteils (16) sowie des besagten Kernplattenteils (22) an einem schiefen Abschnitt (10B) des erwähnten Türrahmens (10) an einer Stelle auf der Seite des Insassenraumes (24) der seitwärtigen Endkante (12A) befestigt sind und daß ein inneres Rippenstück (16B), das sich vom erwähnten inneren Seitenteil (16) aus erstreckt, ausgebildet ist, welches in abdichtende, gleitende Anlage mit der Innenfläche (12C) der erwähnten seitwärtigen Endkante (12A) kommt sowie den befestigten Abschnitt von der Außenseite abdeckt.

4. Konstruktion eines Türrahmens nach irgendeinem der Ansprüche 1, 2 oder 3, dadurch gekennzeichnet, daß der Türrahmen (10) längs der seitwärtigen Endkante (12A) der Türscheibe (12) in einer allgemeinen Kurbelgestalt gekrümmt ist, die Scheibenführung (20) im Querschnitt U-förmig ausgestaltet sowie an ihrem Bodenstück (18) am Türrahmen (10) durch Schrauben-/Mutterelemente (32A, 32B) befestigt ist und ein Ansatz (18A), der vom Bodenstück (18) der Scheibenführung (20) vorspringt, die vordere oder rückwärtige Endkante (12A) der Türscheibe (12) an einer unmittelbaren Berührung der Schrauben-/Mutterelemente (32A, 32B) hindert.

5. Konstruktion eines Türrahmens nach irgendeinem der Ansprüche 1, 2, 3 oder 4, dadurch gekennzeichnet, daß ein Türscheiben-Dichtungsstreifen (30) an einem querliegenden Bauteil und einem schrägen Bauteil befestigt ist, die beide am oberen Seitenteil des Türrahmens (10) angeordnet sind, und eine Oberkanten-Dichtungsnase (30A) hat, die zwischen der oberen Kante der Türscheibe (12) sowie dem Türrahmen (10) einzuklemmen ist, um einen dazwischen gebildeten Raum abzudichten, wenn die Türscheibe (12) gänzlich geschlossen ist, wobei ein innerer Seitendichtungsansatz (30B) in Berührung mit der Innenfläche (12B) der Türscheibe (12) ist.

6. Konstruktion einer Türscheibe nach irgendeinem der Ansprüche 1, 2, 3, 4 oder 5, dadurch gekennzeichnet, daß die Scheibenführung (20) aus einem relativ weichen Harz einschließlich Gummi sowie Kunstharz gebildet und einstückig mit dem metallischen Kernplattenteil (22) hergestellt ist.

**Revendications**

1. Une structure de cadre de portière de véhicule automobile comprenant un cadre de portière (10) comportant une surface extérieure (10A), une glissière de vitre (20) comportant une partie latérale extérieure (14) et une partie latérale intérieure (16) en contact glissant respectivement avec la surface extérieure (12B) et la surface intérieure (12C) d'un bord d'extrémité latéral (12A) d'une vitre de portière (12), et une partie (18) formant le fond et reliant l'une à l'autre lesdites parties latérales extérieure et intérieure (14, 16), ladite partie latérale extérieure (14), ladite partie latérale intérieure (16) et ladite partie formant le fond (18) étant agencées en vue de guider verticalement de façon glissante ladite vitre (12) de portière et d'étancher l'espace formé entre ladite vitre (12) de portière et ledit cadre de portière (10), ladite glissière de vitre (20) comportant en outre un élément formant une plaque d'âme (22) destiné à renforcer ladite glissière de vitre (20), ladite partie latérale extérieure (14) étant située à un emplacement où ladite vitre de portière (12) est décalée en direction de ladite partie latérale extérieure (14) entre ladite partie latérale extérieure (14) et ladite partie latérale inférieure (16), caractérisée en ce que ladite partie latérale extérieure (14) de ladite glissière de vitre (20) est disposée à l'extérieur de ladite surface extérieure (10A) dudit cadre (10) de portière dans le sens transversale dudit véhicule, et en ce que ladite surface extérieure (12B) de ladite vitre de portière (12) est dans l'alignement avec ladite surface extérieure (10A) dudit cadre de portière (10).

2. Une structure de cadre de portière selon la revendication 1, caractérisée en ce que ledit élément formant une plaque d'âme (22) est disposé le long de la surface extérieure (12B) de ladite vitre de portière (12) sur le côté extérieur de ladite partie latérale extérieure (14) de ladite glissière de vitre (20) et est exposé à l'extérieur.

3. Une structure de cadre de portière selon la revendication 1 ou 2, caractérisée en ce que la partie latérale intérieure (16) de ladite glissière de vitre (20), ledit élément formant une plaque d'âme (22) et ledit cadre de porte (10), dans leurs parties qui sont situées en face de la surface intérieure dudit bord d'extrémité latéral (12A) de ladite vitre de portière (12), sont inclinés de manière à se séparer progressivement de la surface intérieure dudit bord d'extrémité latéral (12A) en direction de l'intérieur de l'habitacle (24) et du centre de ladite vitre de portière (12), en ce que les parties inclinées (16A, 22A) de ladite partie latérale intérieure (16) et dudit élément formant une plaque d'âme (22) sont fixées à une partie inclinée (10B) dudit cadre de portière (10), en un emplacement situé sur le côté de l'habitacle (24) dudit bord d'extrémité latéral (12A), et en ce que l'on réalise une partie (16B) formant une ailette intérieure, qui s'étend à partir de ladite partie latérale intérieure (16) et qui vient en contact glissant et étanche avec la surface intérieure (12C) dudit bord d'extrémité latéral (12A) et qui recouvre la partie fixe à partir de l'extérieur.

4. Une structure de cadre de portière selon l'une quelconque des revendications 1, 2 ou 3, caractérisée en ce que le cadre de portière (10) est courbé en forme générale de manivelle le long du bord d'extrémité latéral (12A) de la vitre de portière (12), en ce que la glissière de vitre (20) présente une section transversale en forme de U et est fixée à sa partie de fond (18) au cadre de portière (10) à l'aide de moyens vis-écrou (32A, 32B) et en ce qu'une partie en saillie dépasse de la partie de fond (18) de la glissière de vitre (20), en empêchant le bord d'extrémité avant ou arrière (12A) de la vitre de portière (12) d'entrer directement en contact avec les moyens vis-écrou (32A, 32B).

5. Une structure de cadre de portière selon l'une quelconque des revendications 1, 2, 3 ou 4, caractérisée en ce qu'une bande (30) d'étanchéité aux intempéries de vitre de portière est montée sur un élément transversal et sur un élément oblique qui sont tous les deux disposés sur la partie latérale supérieure du cadre de portière (10) et qui comportent une partie en saillie d'étanchéité et d'extrémité supérieure (30A) apte à être pincée entre l'extrémité supérieure de la vitre de portière (12) et le cadre de portière (10) afin d'étancher l'espace formé entre eux lorsque la vitre de portière (12) est complètement fermée, et une partie en saillie d'étanchéité du côté intérieur (30B) étant en contact avec la surface intérieure (12B) de la vitre de portière (12).

6. Une structure de cadre de portière selon l'une quelconque des revendications 1, 2, 3, 4 ou 5, caractérisée en ce que la glissière de vitre (20) est réalisée en une résine relativement molle, y compris le caoutchouc et les résines de synthèse, et est fabriquée en une seule pièce avec l'élément formant une plaque d'âme métallique (22).

# F i g. 1

# Fig.2

# Fig.3

# Fig.4

22B 18A 14 22
12 12B 14B
14A
12A 16B
12C 16
18
32B
22C
32A
10

# Fig.5

2A 2
h 3A
3
1 1A
4

# Fig. 6